# EUROPÄISCHE PATENTSCHRIFT

(11) **EP 0 509 315 B1**
(45) Veröffentlichungstag und Bekanntmachung des Hinweises auf die Patenterteilung: **01.03.1995**
(21) Anmeldenummer: 92105585.1
(22) Anmeldetag: 01.04.1992
(51) Int. Cl.: C02F 11/00, C02F 11/12, C02F 11/10, F26B 3/20

(54) **Verfahren und Vorrichtung zum Aufbereiten und Entsorgen von umweltbelastenden Feststoffen**
Process and apparatus for treatment and disposal of solid pollutants
Procédé et dispositif pour le traitement et l'élimination de matières polluantes solides

(30) Priorität: 15.04.1991 DE 4112232
(43) Veröffentlichungstag der Anmeldung: 21.10.1992
(73) Patentinhaber: Jörgens, Klaus, D-42111 Wuppertal (DE)
(72) Erfinder: Jörgens, Klaus, D-42111 Wuppertal (DE)
(74) Vertreter: Rehders, Jochen, Dipl.-Ing.

(56) Entgegenhaltungen:
- EP-A- 0 232 861
- DE-B- 2 612 385
- US-A- 4 756 092
- US-A- 4 815 397

## Beschreibung

Die Erfindung betrifft ein Verfahren und eine Vorrichtung zum Aufbereiten und Entsorgen von umweltbelastenden Lackrückstanden in Wasser und/oder Lösungsmittel.

Derartige Rückstände fallen in Lackieranlagen und Labors an und enthalten Schwermetalle und Schwermetallverbindungen, halogenierte Kohlenwasserstoffe, zyklische und polyzyklische Kohlenwasserstoffe und andere chemische Verbindungen.

Es ist bekannt, die die Umwelt belastenden Rückstände einzudicken oder ganz zu verdampfen und die dabei entstehenden Dämpfe und Gase zu reinigen, während die festen Rückstände verpackt oder unverpackt als Sondermüll deponiert oder verbrannt werden.

In der europäischen Patentanmeldung 0 232 861 sind ein Verfahren und eine Vorrichtung zum Zersetzen und Zerstören von gefährlichen und giftigen Schlämmen beschrieben. Den Schlämmen wird zunächst ein Elektrolyt beigemischt, und danach werden die Schlämme in einer Filtervorrichtung entwässert, wonach der Filterkuchen mittels eines Förderbandes in eine feuerfest ausgekleidete Kammer geführt wird. In dieser Kammer wird der Filterkuchen mittels einer Hochspannung erhitzt, wodurch die verbleibende Flüssigkeit verdampft und die Feststoffe zersetzt werden, so daß ein kohleartiges Material entsteht, das ungiftig und ungefährlich ist, so daß es sich deponieren läßt. Eine zusätzliche Sterilisation und Oxidation wird durch Zufuhr von Ozon erreicht. Die in der Kammer entstehenden Gase und Dämpfe werden aufgefangen und gereinigt.

Der Erfindung liegt die Aufgabe zugrunde, ein einfaches und wirksames Verfahren sowie eine Vorrichtung zu schaffen, die sowohl für das Aufbereiten und Entsorgen im Laboratoriumsmaßstab als auch im Großmaßstab geeignet ist.

Ausgehend von dieser Aufgabenstellung wird bei einem Verfahren der eingangs erwähnten Art vorgeschlagen, daß erfindungsgemäß die flüssigen oder pastösen Lacktückstände in einer Schicht auf eine hoch erhitzte, sich bewegende Unterlage aus einem hitzebeständigen Förderband oder Drehteller aufgebracht werden, derart, daß ein sofortiges Verdampfen des Wassers und/oder des Lösungsmittels eintritt und dadurch ein Anbacken der Lacktückstände an der Unterlage verhindert wird, daß die Lackrückstände nach Verdampfen des Wassers und/oder Lösungsmittels auf Zersetzungstemperatur der Feststoffe erhitzt, die Dämpfe und gasförmigen Zersetzungsprodukte aufgefangen und einer Reinigung zugeführt sowie die verbleibenden Feststoffe von der Unterlage entfernt und entsorgt werden.

Durch diese Wärmebehandlung, die zwischen 200° und 500° C liegt, vorzugsweise bei 300° bis 400° C, werden das Wasser und das Lösungsmittel verdampft, während die chemischen Verbindungen so weit zersetzt werden, daß die gasförmigen oder bei der Behandlungstemperatur verdampfenden Zersetzungsprodukte aufgefangen und einer Gasreinigung zugeführt werden können. Die verbleibenden Feststoffe enthalten die Schwermetalle und Schwermetallverbindungen, mineralische Bestandteile, feste Zersetzungsprodukte und Bestandteile, die bei den angewandten Temperaturen nicht zerfallen. Diese Feststoffe fallen in verhältnismäßig geringer Menge an, lassen sich von der sich bewegenden Unterlage als Granulat problemlos entfernen und können verpackt oder unverpackt einer Sondermülldeponie zugeführt werden.

Die Vorrichtung zur Durchführung des Verfahrens besteht erfindungsgemäß aus einem angetriebenen, hitzebeständigem Förderband oder Drehteller, einer Auftragvorrichtung für flüssige oder pastöse Lackrückstände auf das Förderband oder den Drehteller, einer das Förderband oder den Drehteller auf eine so hohe Temperatur heizende Heizvorrichtung, daß sich zwischen dem Förderband oder dem Drehteller und dem flüssigen oder pastösen Lackrückstände eine ein Anbacken verhindernde Dampfschicht bildet, eine Absaugung für Gase und Dämpfe und einer Austragvorrichtung für auf dem Förderband oder Drehteller verbleibende trockene Feststoffe.

Für große Leistungen kann die sich bewegende Unterlage aus einem hitzebeständigen Förderband bestehen, auf das an einem Ende die flüssigen oder pastösen Feststoffe aufgebracht und von dem am anderen Ende nach der Hitzebehandlung verbleibende, trockene Feststoffe entsorgt werden.

Eine Vorrichtung für die Entsorgung im Labormaßstab kann eine Unterlage aus einem hitzebeständigen Drehteller aufweisen. Dieser Drehteller kann bereichsweise oder insgesamt auf die Behandlungstemperatur erhitzt werden. Ein Bereich des Drehtellers kann mit der Auftragvorrichtung in Form eines radialen, zum Drehteller einen Spalt von 0,5 bis 5 mm freilassenden Rakels versehen sein, während die Auftragvorrichtung aus einem weiteren radialen, auf dem Drehteller aufstehenden Rakel bestehen kann.

Der Rakel im Bereich der Auftragvorrichtung sorgt dafür, daß die flüssigen oder pastösen Feststoffe mit einer vorgebbaren Schichtdicke auf den Drehteller aufgebracht und gleichmäßig verteilt werden, während die getrockneten und zersetzten Feststoffe mittels des anderen Rakels, der auf dem Drehteller spielfrei aufsteht, abgeschabt wird.

Da die flüssigen oder pastösen Feststoffe auf den hoch erhitzten Teller aufgetragen werden, bildet sich sofort zwischen dem Drehteller und den flüssigen oder pastösen Feststoffen eine Dampfschicht, die ein Anbacken der Feststoffe verhindert, so daß sich die verbleibenden, trockenen Feststoffe nach Beendigung der Behandlung problemlos vom Drehteller entfernen lassen.

Vorzugsweise kann der Drehteller schwach konisch zur Drehachse abfallend ausgebildet sein, einen umlaufenden hochstehenden Rand am Außenumfang aufweisen und die Drehachse aus einem, den Drehteller zentrisch durchdringenden, einen hochstehenden Rand bildenden Rohr bestehen. Dieses Rohr läßt sich als Austragkanal für die trockenen Feststoffe benutzen.

Die Heizvorrichtung kann in ihrer einfachsten Form aus einem Brenner bestehen, der mit Brenngas oder flüssigen Brennstoff versorgt wird. Dieser Brenner kann direkt unter dem Drehteller angeordnet sein, so daß dieser im Bereich des Brenners beheizt wird. Da sich der Drehteller langsam um seine Achse dreht, stellt sich alsbald eine gleichmäßige Temperatur des Drehtellers ein.

Um Wärmeverluste zu vermeiden und das System möglichst vollständig abzudichten, so daß nur die über die Absaugung abgezogenen Gase aus der Vorrichtung austreten und einer Reinigungsbehandlung unterzogen werden, kann der Drehteller in einem wärmisolierten Gehäuse mit einem unter den Drehteller geführten Heißgaskanal, einer oberhalb des Drehtellers angeordneten, den Drehteller weitgehend abgedichtet übergreifenden Absaughaube und einem den Drehteller und die Absaughaube umgreifenden Abgaskanal angeordnet sein, wobei der Abgaskanal über ein Gebläse mit dem Heißgaskanal verbunden sein kann. Vorzugsweise ist der Brenner dann stromab vom Gebläse im Heißgaskanal angeordnet. Auf diese Weise wird erreicht, daß die durch den Brenner aufgeheizten Gase im Kreislauf innerhalb des wärmeisolierten Gehäuses umlaufen und nur die bei der Wärmebehandlung der flüssigen oder pastösen Feststoffe entstehenden Gase und Dämpfe mit einem Teil der Abgase des Brenners über die Absaughaube abgeführt und einer Reinigung unterzogen werden.

Die Erfindung wird nachstehend anhand zweier in der Zeichnung dargestellter Ausführungsbeispiele des näheren erläutert. In der Zeichnung zeigen:
- Fig. 1: einen Längsschnitt durch eine erfindungsgemäße Vorrichtung für den Laborgebrauch und
- Fig. 2: eine erfindungsgemäße Vorrichtung in einem wärmeisolierten Gehäuse.

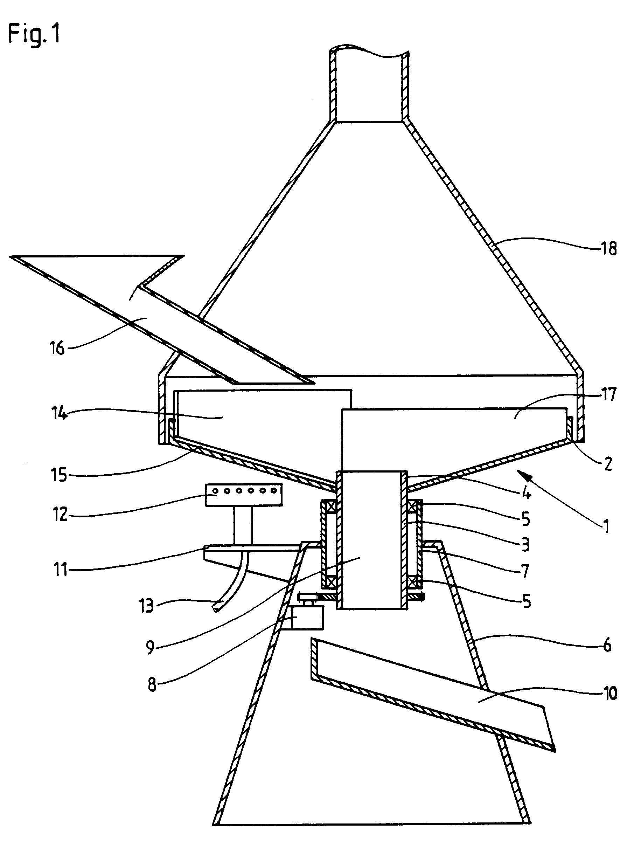

Bei der Vorrichtung gemäß Fig. 1 besteht die hitzebeständige Unterlage aus einem Drehteller 1 mit einem hochstehenden Rand 2 am äußeren Umfang. Der Drehteller 1 ist schwach konisch zur Drehachse hin abfallend ausgebildet. Die Drehachse wird durch ein Rohr 3 gebildet, das den Drehteller 1 durchdringt und einen konzentrischen hochstehenden Rand 4 bildet. Das nach unten aus dem Drehteller 1 heraustretende Rohrende ist in einer Lagerhülse 7 über Wälzlager 5 drehbar gelagert. Die Lagerhülse 7 ist in einer konischen Stütze 6 befestigt. Diese konische Stütze 6 dient als Fuß für die Vorrichtung. Ein Getriebemotor 8 setzt den Drehteller 1 über das Rohr 3 in langsame Umdrehung. Die Bohrung des Rohrs 3 bildet einen Austragkanal 9 für behandelte Feststoffe, die über eine Schütte 10 nach außen abgeführt und in nicht dargestellter Weise aufgefangen und entsorgt werden. Seitlich an der konischen Stütze 6 ist eine Konsole 11 angeordnet, die als Halterung für einen Gasbrenner 12 dient. Dieser Gasbrenner 12 ist unterhalb des Drehtellers 1 angeordnet und erhitzt ihn auf die erforderliche Behandlungstemperatur zwischen 200° und 500° C, vorzugsweise 300° bis 400° C.

Dem Brenner 12 wird Brenngas über eine Gasleitung 13 zugeführt.

Ein Rakel 14 ist mit Abstand zum Drehteller radial angeordnet und bildet einen einstellbaren Spalt 15 von 0,5 bis 5 mm Breite, wodurch die Schichtdicke der über einen Fülltrichter 16 zugeführten flüssigen oder pastösen Feststoffe auf den Drehteller 1 bestimmt wird. Der Fülltrichter 16 ist durch eine Absaughaube 18 geführt, die den hochstehenden Rand 2 des Drehtellers 1 weitgehend abgedichtet übergreift. Ein nicht dargestelltes Sauggebläse fördert die entstehenden Gase und Dämpfe von der Absaughaube 18 zu einer nicht dargestellten Reinigungsanlage. Durch die Öffnung für die Schütte 10 und den Austragkanal 9 wird Luft zusätzlich mit angesaugt, die dazu dient, das Rohr 3 und die Wälzlager 5 zu kühlen. Ein weiterer Rakel 17 ist auf dem Drehteller aufstehend so angeordnet, daß die gebildeten, trockene Feststoffe über den Austragkanal 9 und die Schütte 10 ausgetragen werden.

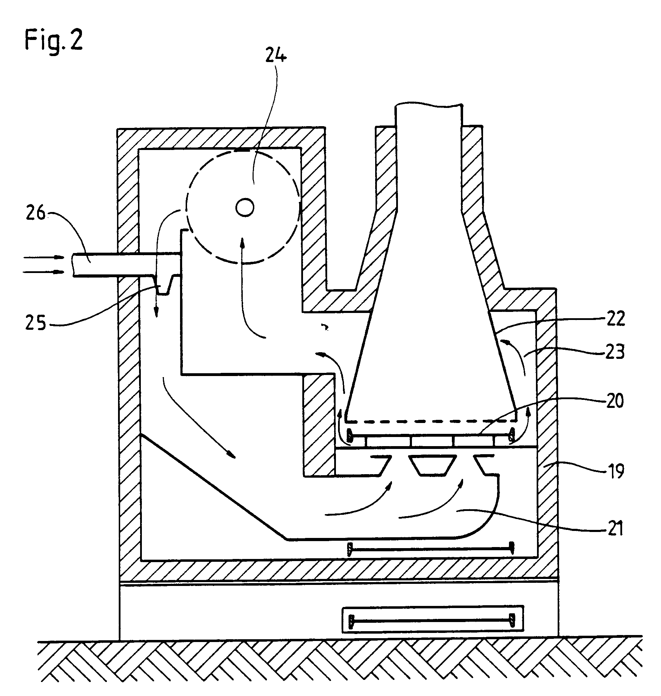

Die in Fig. 2 dargestellte Vorrichtung bildet ein geschlossenes wärmeisoliertes System und besteht aus einem wärmeisolierten Gehäuse 19, in dem der Drehteller 20 angeordnet ist. Ein Heißgaskanal 21 ist unter den Drehteller 20 geführt, so daß sich die heißen Gase unterhalb des Drehtellers verteilen und seitlich um den Rand des Drehtellers 20 herum in einen Abgaskanal 23 übertreten. Oberhalb des Drehtellers 20 ist wieder eine Absaughaube 22 so angeordnet, daß nur geringe Mengen der heißen Gase durch den Spalt zwischen dem Drehteller 20 und der Absaughaube 22 hindurchtreten können.

Die Abgase im Abgaskanal 23 werden durch ein Sauggebläse 24 angesaugt und im Kreislauf dem Heißgaskanal 22 zugeführt.

Stromabwärts von Sauggebläse 24 ist ein Brenner 25 angeordnet, mit einer Zuleitung 26 für ein Gas-Luft-Gemisch. Durch die im Kreislauf über den Heißgaskanal 21 und den Abgaskanal 23 herumgeführten Gase bleibt ein großer Teil der über den Brenner 25 zugeführten Wärme erhalten, so daß eine verhältnismäßig geringe Brennerleistung zum Behandeln der flüssigen oder pastösen Feststoffe erforderlich ist. Über die Absaughaube 22 werden die durch die Behandlung der flüssigen und/oder pastösen Feststoffe entstehenden Gase und Dämpfe sowie eine Gasmenge, die dem zugeführten Gas-Luft-Gemisch entspricht, abgeführt. Diese Gase und Dämpfe werden in einer nicht gezeigten Reingungsanlage von schädlichen Stoffen gereinigt.

Die in der Zeichnung dargestellten Ausführungsbeispiele sind für kleinere, im Labormaßstab zu betreibende Vorrichtungen geeignet. Sollen größere Mengen flüssiger oder pastöser Feststoffe behandelt werden, ist es vorteilhaft, statt eines Drehtellers ein hitzebeständiges Förderband vorzusehen, auf dessen eines Ende die zu behandelnden flüssigen oder pastösen Feststoffe aufgebracht und von dessen anderem Ende die verbleibenden, trockenen Feststoffe entfernt werden. Das gesamte Förderband kann in einem isolierten Kanal umlaufen, der mit Heißgas beaufschlagt wird und eine Absaugung für die entstehenden Gase und Dämpfe aufweist.

## Patentansprüche

1. Verfahren zum Aufbereiten und Entsorgen von umweltbelastetenden Lackrückständen in Wasser und/oder Lösungsmittel, wobei die flüssigen oder pastösen Lackrückstände in einer Schicht auf eine hoch erhitzte, sich bewegende Unterlage aus einem hitzebeständigen Förderband oder Drehteller aufgebracht werden, derart, daß ein sofortiges Verdampfen des Wassers und/oder Lösungsmittels eintritt und dadurch ein Anbacken der Lackrückstände an der Unterlage verhindert wird, daß die Lackrückstände nach Verdampfen des Wassers und/oder Lösungsmittels auf Zersetzungstemperatur der Feststoffe erhitzt, die Dämpfe und gasförmigen Zersetzungsprodukte aufgefangen und einer Reinigung zugeführt, sowie die verbleibende Feststoffe von der Unterlage entfernt und entsorgt werden.

2. Vorrichtung zur Durchführung des Verfahrens nach Anspruch 1, enthaltend ein angetriebenes, hitzebeständiges Förderband oder einen Drehteller (1, 20), eine Auftragvorrichtung (14, 16) für flüssige oder pastöse Lackrückstände auf das Förderband oder den Drehteller (1, 20), eine das Förderband oder den Drehteller (1, 20) auf eine so hohe Temperatur heizende Heizvorrichtung (12, 25), das sich zwischen dem Förderband oder dem Drehteller (1, 20) und den flüssigen oder pastösen Lackrückständen eine ein Anbacken verhindernde Dampfschicht bildet, eine Absaugung (18, 20) für Gase und Dämpfe und eine Austragvorrichtung (9, 10, 17) für auf der Unterlage (1, 20) verbleibende, trockene Feststoffe.

## Claims

1. Method of processing and disposing of environmentally unfriendly paint residues in water and/or solvent, wherein the liquid or paste-like paint residues are applied in a layer onto a moving substrate heated to high temperature consisting of a heat-resistant conveyor belt or rotary plate so that evaporation of the water and/or solvent occurs immediately and the paint residues are prevented from baking onto the substrate, wherein the paint residues are heated to the decomposition temperature of the solids after the water and/or solvent has evaporated, the vapours and gaseous decomposition products are collected and passed to a purification unit, and the remaining solids are removed from the substrate and disposed of.

2. Apparatus for carrying out the method according to Claim 1 comprising a driven, heat-resistant conveyor belt or a rotary plate (1, 20), a feed device (14, 16) to apply the liquid or paste-like paint residues onto the conveyor belt or the rotary plate (1, 20), a heating device (12, 25) to heat the conveyor belt or the rotary plate (1, 20) to a sufficiently high temperature to produce a vapour layer between the conveyor belt or the rotary plate (1, 20) and the liquid or paste-like paint residues to prevent these from baking onto the former, a suction device (18, 20) for gases and vapours and a delivery device (9, 10, 17) to remove dry solids remaining on the substrate (1, 20).

## Revendications

1. Procédé de préparation et d'élimination de dépôts de peinture, polluant l'environnement, dans de l'eau et/ou dans un solvant, les dépôts de peinture liquides ou pâteux étant appliqués en une couche sur un support en déplacement, fortement chauffé, compose d'une bande transporteuse ou d'un plateau rotatif résistant à la température, de manière à ce que se produise une vaporisation instantanée de l'eau et/ou du solvant et que, de ce fait, soit empêchée toute cuisson accompagnée d'adhérence des dépôts de peinture sur le support, en ce que les dépôts de peinture, après vaporisation de l'eau et/ou du solvant, sont chauffés à la température de décomposition des solides, les vapeurs et les produits de décomposition gazeux étant captés et amenés à un poste d'épuration, les solides restant étant enlevés du support et éliminés.

2. Dispositif pour mettre en oeuvre le procédé selon la revendication 1, comportant une bande transporteuse ou un plateau rotatif (1, 20) entraîné(e), résistant à la température, un dispositif de captage (14, 16) pour des dépôts de peinture liquides ou pâteux se trouvant sur la bande transporteuse ou le plateau rotatif (1, 20), un dispositif de chauffage (12, 25) chauffant la bande transporteuse ou le plateau rotatif (1, 20) à une température telle qu'entre la bande transporteuse ou le plateau rotatif (1, 20) et les dépôts de peinture liquides ou pâteux se constitue une couche de vapeur empêchant toute cuisson accompagnée d'adhérence, une aspiration d'évacuation (18, 20) pour les gaz et les vapeurs et un dispositif d'extraction (9, 10, 17) destiné aux solides secs subsistant sur le support (1, 20).
